# EUROPEAN PATENT APPLICATION

(11) **EP 4 750 003 A1**
(43) Date of publication of application: **27.05.2026**
(21) Application number: 25215214.5
(22) Date of filing: 12.11.2025
(51) Int. Cl.: H04L 12/40, G06F 13/14, H04L 67/2869

(54) **ELECTRONIC CONTROL UNIT COMMUNICATION PROTOCOL OVER AUDIO NETWORK**

(30) Priority: 20.11.2024 US 202463722707 P; 05.11.2025 US 202519380024
(71) Applicant: Harman International Industries, Incorporated, Stamford, CT 06901 (US)
(72) Inventor: CHEN, Zhijun, Stamford, 06901 (US)
(74) Representative: Kraus & Lederer PartGmbB

(57) **Abstract**

Techniques are described for communications for audio systems. Some techniques involve receiving, by a protocol layer, a command from a first application layer of the first computing device, mapping the command to a protocol code and a parameter, and transmitting data that includes the protocol code and the parameter through an audio network, for example, to a second computing device.

## Description

### BACKGROUND

### Field of the Various Embodiments

This application relates to audio systems and, more specifically, to an electronic control unit communication protocol over an audio network.

### Description of the Related Art

Vehicles such as trucks, busses, automobiles, tractors, elevators, and the like can include a controller area network (CAN) bus that allows devices to exchange data with each other. The CAN bus of a vehicle connects various devices including electronic control units for various different vehicle systems. The CAN bus has a high amount of overhead both in data formatting and in the high number of different devices utilizing the CAN bus.

Audio systems for vehicles often include multiple different devices that operate in conjunction with one another to provide vehicle audio. For example, a vehicle audio system may include a primary amplifier, one or more secondary amplifiers, a subwoofer amplifier, lighting devices, and/or the like. The various devices communicate certain information with one another for functions including software updates for security and other purposes. As a result, the audio systems require a communication mechanism capable of these communication functions.

If a vehicle audio system connects to a CAN bus, both the vehicle audio system and other vehicle systems may experience slowdowns and failures caused by network resource competition. As a result, using the CAN bus, network resource competition typically cause the connection to be slower than the rated data transfer speed for the bus. As a result, audio systems can lack the ability to apply updates reliably as well as exchange commands and/or data. Furthermore, suppliers of audio systems typically decline to provide a separate dedicated bus connection as impractical.

As the foregoing illustrates, what is needed in the art is improved techniques for communications for audio systems.

### SUMMARY

One embodiment of the present disclosure sets forth a method that includes receiving, by a protocol layer of a first computing device, a command from a first application layer of the first computing device; mapping the command to a protocol code and a parameter; and transmitting, to a second computing device, data that includes the protocol code and the parameter, where the data is transmitted through an audio network, for example, for a vehicle.

At least one technical advantage of the disclosed techniques relative to the prior art is that the disclosed techniques increase the actual data transfer speed of tuning operations, system diagnostics, and firmware updates for the vehicle audio system. The disclosed techniques also reduce overhead on a vehicle CAN bus. The disclosed techniques also reduce communications failures and network resource competition. The reduction of failed communications reduces the total number of communications generated in the overall system. As a result, the disclosed techniques provide improved communications reliability for the audio system as well as other vehicle systems.

These technical advantages represent one or more technological improvements over prior art approaches.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 is a schematic diagram illustrating an audio system according to various embodiments;
Figure 2 is a sequence diagram illustrating functionalities of the audio system of Figure 1, according to various embodiments;
Figure 3 is another sequence diagram illustrating functionalities of the audio system of Figure 1, according to various embodiments;
Figure 4 is another sequence diagram illustrating a firmware or software update process of the audio system of Figure 1, according to various embodiments;
Figure 5 is a data structure diagram for data transmitted by the audio system of Figure 1, according to various embodiments; and
Figure 6 is a flow diagram of method steps for transmitting data using the audio system of Figure 1, according to various embodiments.

### DETAILED DESCRIPTION

In the following description, numerous specific details are set forth to provide a more thorough understanding of the various embodiments. However, it will be apparent to one of skilled in the art that the inventive concepts may be practiced without one or more of these specific details.

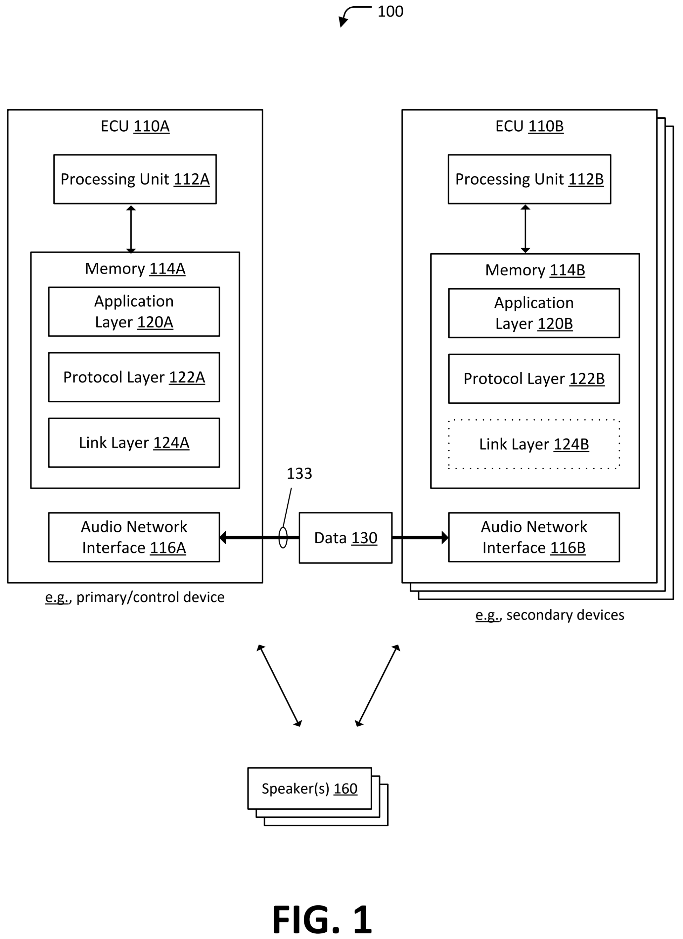

Figure 1 is a schematic diagram illustrating an audio system 100 according to various embodiments. As shown, the audio system 100 includes, without limitation, an electronic control unit 110A, an electronic control unit 110B, and one or more speakers 160. The electronic control unit 110A includes, without limitation, a processing unit 112A, a memory 114A, and an audio network interface 116A. The memory 114A stores, without limitation, an application layer 120A, a protocol layer 122A, and a link layer 124A. The electronic control unit 110B includes, without limitation, a processing unit 112B, a memory 114B, and an audio network interface 116B. The memory 114B stores, without limitation, an application layer 120B, a protocol layer 122B, and a link layer 124B, which is limited, bypassed, and/or absent in some embodiments. The data 130 is advantageously transmitted using an audio network 133.

In operation, the audio system 100 provides a secure ECU communication protocol transmitted over audio network hardware including the audio network interfaces 116A and 116B, physical audio network cables, and the like. In various embodiments, audio system 100 is located in a vehicle. Accordingly, some embodiments of the audio system 100 includes a vehicle-based audio system for a passenger vehicle (e.g., truck, bus, automobile), an agricultural vehicle, an industrial vehicle, an aviation vehicle, or another type of vehicle. Some embodiments of the audio system 100 audio system 100 are used for cable cars, elevators and the like.

The electronic control unit 110A includes a primary or control device that connects and/or controls one or more electronic control units 110B. While a single electronic control unit 110A is shown as a primary device, some embodiments of the audio system 100 include multiple primary devices (e.g., electronic control units 110A), each connected to a number of secondary devices (e.g., electronic control units 110B). The electronic control unit 110A can operate as a primary device that initiates and/or manages events including reads, writes, updates, resets, buffer size checks, sequenced chunk data transfers according to buffer size, and security operations in conjunction with the various electronic control units 110B. Security operations include security key transfers, signature checks, and so on. In one example, electronic control unit 110A transfers data 130 over the audio network 133 to flash an update to electronic control unit 110B that enables updated features. The electronic control unit 110B transfers data 130 over the audio network 133 indicating a result of the update. In some embodiments, the data 130 includes serial peripheral interface (SPI) data that is transferred at least in part using SPI busses or communications channels of electronic control units 110. In some embodiments, the data 130 includes inter-integrated circuit (I2C) data of that is transferred at least in part using I2C busses or communications channels of electronic control units 110. In some embodiments, the data 130 includes universal asynchronous receiver/transmitter (UART) data of that is transferred at least in part using UART busses or communications channels of electronic control units 110.

The processing unit 112A can be any suitable processor, such as a central processing unit (CPU), a graphics processing unit (GPU), an application-specific integrated circuit (ASIC), a field programmable gate array (FPGA), a digital signal processor (DSP), Micro Controller Unit (MCU), System On Chip (SoC), and/or any other type of processing unit, or a combination of different processing units, such as a CPU configured to operate in conjunction with a GPU and/or a DSP. In general, a processing unit 112 can be any technically feasible hardware unit capable of processing data and/or executing software applications, for example, in conjunction with the memory 114A.

The memory 114A can include a random-access memory (RAM) module, a flash memory unit, or any other type of memory unit or combination thereof. The processing unit 112A is configured to read data from and write data to one or more memories 114A. In various embodiments, a memory 114A includes non-volatile memory, such as optical drives, magnetic drives, flash drives, or other storage. In some embodiments, separate data stores, such as an external data stores included in a network ("cloud storage") can supplement a memory 114A. The application layer 120A, the protocol layer 122A, and software aspects of the link layer 124A within the memory 114A can be executed by the processing unit 112A to implement the overall functionality of electronic control unit 110A and, thus, to coordinate the operation of the audio system 100 as a whole. In various embodiments, an interconnect bus (not shown) connects the processing unit 112A, the memory 114A, the speaker(s) 160, and any other components of electronic control unit 110A (and electronic control unit 110B).

The application layer 120A includes software instructions corresponding to applications provided using electronic control unit 110A (and/or the connected electronic control units 110B). In some embodiments the application layer 120A includes an audio application that generates various audio effects in the vicinity of the user using sound fields of the speakers 160. The protocol layer 122A and the link layer 124A enable the application layer 120A to communicate data 130 to the application layer 120B. The application layer 120A manages operations such as updating the application layer 120B, transferring commands such as reset commands to the application layer 120B, and performing other operations with respect to the application layer 120B (and/or electronic control unit 110B) using the data 130 advantageously transferred through the audio network 133 using specified information and/or protocol that enables using the audio network 133 for this purpose. In some examples, the link layer 124A is a SPI, UART, I2C or other link layer that connects to an audio network 133 that includes a corresponding bus.

The processing unit 112B can be any suitable processor, such as a CPU, GPU, ASIC, FPGA, DSP, MCU, SoC, and/or any other type of processing unit, or a combination of different processing units, such as a CPU configured to operate in conjunction with a GPU and/or a DSP. In general, a processing unit 112B can be any technically feasible hardware unit capable of processing data and/or executing software applications, for example, in conjunction with the memory 114B.

The memory 114B can include a RAM module, a flash memory unit, or any other type of memory unit or combination thereof. The processing unit 112B is configured to read data from and write data to one or more memories 114B. In various embodiments, a memory 114B includes non-volatile memory, such as optical drives, magnetic drives, flash drives, or other storage. In some embodiments, separate data stores, such as an external data stores included in a network ("cloud storage") can supplement a memory 114B. The application layer 120B, the protocol layer 122B, and software aspects of the link layer 124B within the memory 114B can be executed by the processing unit 112B to implement the overall functionality of electronic control unit 110A and, thus, to coordinate the operation of the audio system 100 as a whole. In various embodiments, an interconnect bus (not shown) connects the processing unit 112B, the memory 114B, the speaker(s) 160, and any other components of electronic control unit 110B (and electronic control unit 110A).

The application layer 120B includes software instructions corresponding to applications provided using electronic control unit 110B (and/or the connected electronic control units 110B). In some embodiments the application layer 120B includes an audio application that generates various audio effects in the vicinity of the user using sound fields of the speakers 160. The protocol layer 122B and the link layer 124B enable the application layer 120B to receive, implement, and respond to updates, reset commands and other events or operations initiated by the application layer 120A. In some examples, the link layer 124B is an SPI link layer, an I2C link layer, or a UART link layer that connects to an audio network 133 that includes a corresponding SPI, I2C, or UART bus.

The speaker(s) 160 include various speakers for outputting audio to create the sound field or the various audio effects in the vicinity of the user. The speaker(s) 160 include speakers of a vehicle. In some embodiments, the sound field generated using the speaker(s) 160 is generated according to one or more audio signals generated and/or transmitted through the audio network 133 by electronic control units 110A, and/or 110B. In some embodiments, the audio signals transmitted through the audio network 133 are transmitted concurrently, with partial concurrence, and/or interleaved with the data 130. Speakers 160 can also be driven by electronic control units 110A, and/or 110B.

In one example of the operation of the audio system 100, the application layer 120A generates a command to initiate an event such as a read, write, update, reset and so on. The protocol layer 122A translates or maps a command received from the application layer 120A to a protocol code and a parameter that performs the command, as well as packs write data (e.g., data for the application layer 120B to write). The protocol layer 122A provides the protocol code, the parameter, and the write data to the link layer 124A. In some embodiments, the protocol layer 122A provides information to the link layer 124A in a particular format, and the link layer 124A adds node information and/or padding data. The node information identifies a node corresponding to electronic control unit 110B and/or return information identifying a node corresponding to electronic control unit 110A. The electronic control unit 110A transfers the resulting data 130 through the audio network 133. In some embodiments, electronic control unit 110A determines whether to delay transmission based on other audio data for other audio functions for the audio network 133 and a priority ranking of the other audio data for other audio functions. For example, the protocol layer 122A or link layer 124A of electronic control unit 110A determines whether a comparison of a first priority of the command received from the application layer 120A and a second priority of the other function data indicates that the data 130 should be delayed until after the other audio data for the other audio function is transmitted. In one example, the data 130 is delayed if the first priority is less than the second priority of the other audio function. Otherwise, the data 130 is not delayed. The link layer 124B provides the data 130 to the protocol layer 122B, or in other examples, the link layer 124B is omitted and/or bypassed, and the protocol layer 122B identifies the data 130 (e.g., in a buffer). The protocol layer 122B translates or maps the protocol code and the parameter to a command and provides the command to the application layer 120B. The application layer 120B performs one or more actions to implement the command. For example, the application layer 120B writes the write data to the memory 114B.

In some examples, the application layer 120B additionally or alternatively reads data from the memory 114B based on the command, and returns the read data to the application layer 120A. To this end, the application layer 120B provides the read data to the protocol layer 122B (e.g., as a command to ingest/process read data). The protocol layer 122B translates or maps a command received from the application layer 120B to a protocol code and a parameter that performs the command, as well as packs the read data (e.g., data read by the application layer 120B). The protocol layer 122B provides the protocol code, the parameter, and the read data to the link layer 124B. In some embodiments, the protocol layer 122B provides information to the link layer 124B in a particular format, and the link layer 124B adds node information and/or padding data. Alternatively, the protocol layer 122B generates the return data 130. In some embodiments, electronic control unit 110B determines whether to delay transmission based on other audio data for other audio functions for the audio network 133 and a priority ranking of the other audio data for other audio functions. For example, the protocol layer 122B or link layer 124B of electronic control unit 110B determines whether a comparison of a third priority of the command received from the application layer 120A and a fourth priority of the other function data indicates that the return data 130 should be delayed until after the other audio data for the other audio function is transmitted. In one example, the return data 130 is delayed if the third priority is less than the fourth priority of the other audio function. Otherwise, the return data 130 is not delayed. The electronic control unit 110B transfers the resulting data 130 through the audio network 133. The link layer 124A provides the return data 130 to the protocol layer 122A. The protocol layer 122A translates or maps the protocol code and the parameter to a command (e.g., the command to ingest/process read data) and provides the command to the application layer 120A.

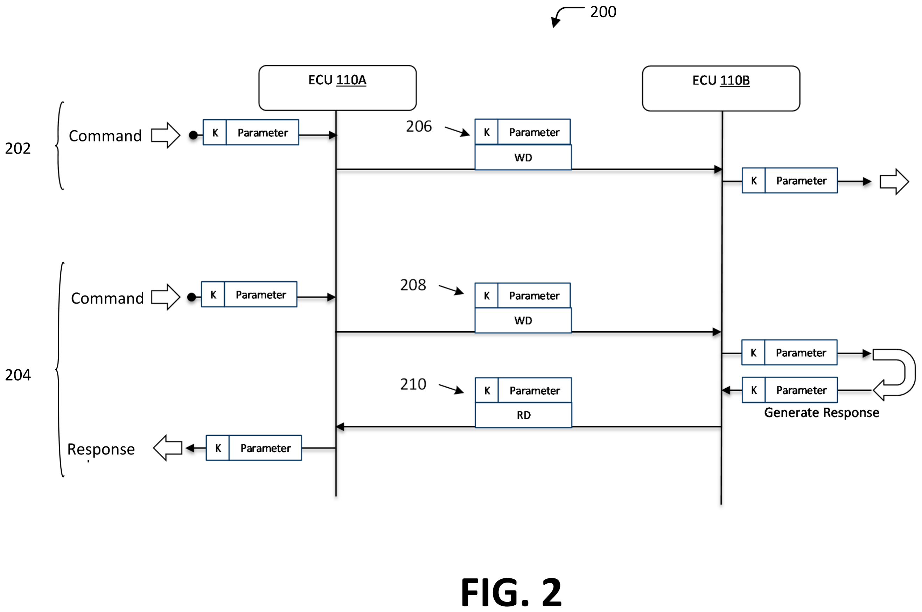

Figure 2 is a sequence diagram 200 illustrating functionalities of the audio system 100 of Figure 1, according to various embodiments. The sequence diagram 200 includes, without limitation, an electronic control unit 110A, an electronic control unit 110B, a communication sequence 202, and a communication sequence 204. The communication sequence 202 includes, without limitation, data transmission 206. The communication sequence 204 includes, without limitation, data transmission 208 and data transmission 210.

Communication sequence 202 performs a command such as a write, a reset, or other command that does not include or require a response. Electronic control unit 110A identifies the command from an application, application layer and/or the like. electronic control unit 110A translates or maps the command to a protocol code K and a parameter that performs the command. In some examples, electronic control unit 110A also identifies payload data such as write data WD that enables electronic control unit 110B to perform the command. While this example involves write data WD, any payload data can be included in data transmission 206. Electronic control unit 110A uses the protocol code K, the parameter, and write data WD to generate data 130 for data transmission 206. Electronic control unit 110A transmits data transmission 206 to electronic control unit 110B through the audio network 133. Electronic control unit 110B receives data transmission 206, and uses the data 130 to perform the command based on the protocol code K, the parameter, and/or the write data WD. While communication sequence 202 is shown as a main-to-secondary communication sequence (e.g., from electronic control unit 110A to electronic control unit 110B), some embodiments include a secondary-to-main communication sequence (e.g., from electronic control unit 110B to electronic control unit 110A). In such a secondary-to-main communication sequence, the functions for each device are reversed relative to the description of communication sequence 202.

Communication sequence 204 performs a command that requests a response from electronic control unit 110B. Electronic control unit 110A identifies the command and translates or maps the command to a protocol code K and a parameter that performs the command that requests a response from electronic control unit 110B. In some examples, electronic control unit 110A also identifies payload data such as write data WD that enables electronic control unit 110B to perform the command. Electronic control unit 110A uses the protocol code K, the parameter, and write data WD to generate data 130 for data transmission 208. electronic control unit 110A transmits data transmission 208 to electronic control unit 110B through the audio network 133. While communication sequence 204 is initiated using a main-to-secondary communication, some embodiments are initiated using a secondary-to-main communication, such that the functions for each device are reversed relative to the description of communication sequence 204.

Electronic control unit 110B receives data transmission 208, and uses the data 130 to perform the command based on the protocol code K, the parameter, and/or the write data WD. The command causes electronic control unit 110B to generate data 130 for a response, for example, based on the protocol code K, the parameter, the write data WD, as well as one or more states or processes of electronic control unit 110B. In various embodiments, the response includes an indication of whether the write data WD was successfully written, an indication of whether the command was successfully performed, and/or the like. In some examples, electronic control unit 110B also identifies payload data such as read data RD that is read based on the command. Electronic control unit 110B uses the read data RD as well as the protocol code K and the parameter from data transmission 208 to generate the data 130 for a response such as data transmission 210. In some examples, the protocol code K and the parameter of data transmission 208 are the same as the protocol code K and the parameter in response data transmission 210. However, in other examples, the response data transmission 210 includes a different protocol code K and parameter. In either example, the protocol code K and the parameter of data transmission 210 are based on the protocol code K and the parameter of data transmission 208. electronic control unit 110B transmits data transmission 210 to electronic control unit 110A through the audio network 133. In some embodiments, electronic control unit 110A performs a command based on the protocol code K, the parameter, and the read data RD of data transmission 210.

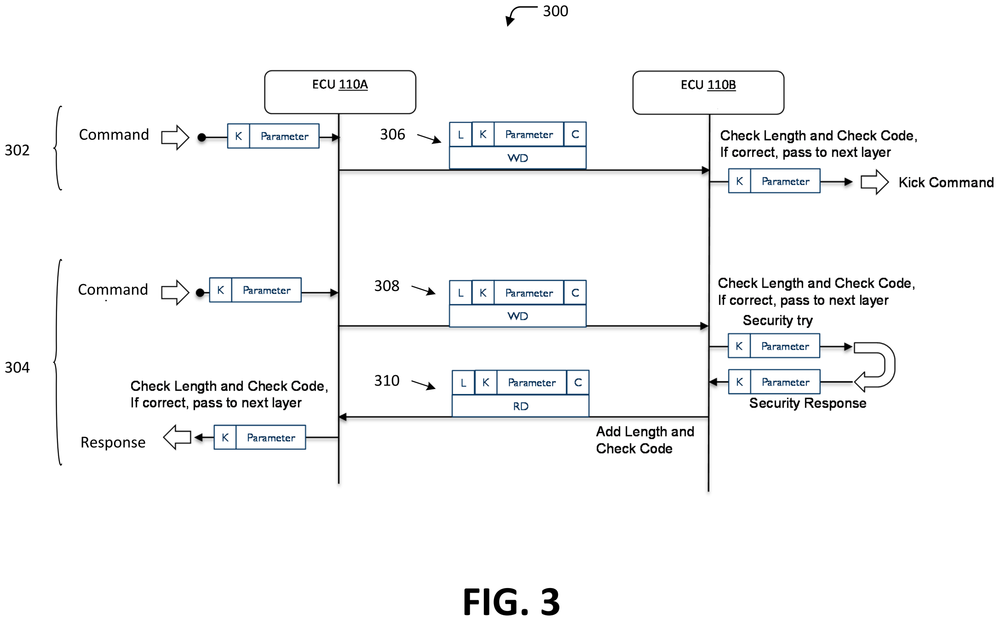

Figure 3 is another sequence diagram 300 illustrating functionalities of the audio system 100 of Figure 1, according to various embodiments. The sequence diagram 300 includes, without limitation, an electronic control unit 110A, an electronic control unit 110B, a communication sequence 302, and a communication sequence 304. The communication sequence 302 includes, without limitation, data transmission 306. The communication sequence 304 includes, without limitation, data transmission 308 and data transmission 310. By way of comparison with sequence diagram 200 of Figure 2, sequence diagram 300 shows an example where data transmissions ensure reliability and/or security by including a length and a check code in each data transmission, in addition to the protocol code, parameter value, and data payload.

Communication sequence 302 performs a command that includes error validation information, where the command does not request a response. Electronic control unit 110A identifies the command and maps the command to a protocol code K and a parameter. Electronic control unit 110A identifies also identifies payload data such as write data WD. In this example, electronic control unit 110A also identifies check code C. Check code C includes any feasible code or value that electronic control unit 110B uses to confirm the data transmission 306 is error free, secure, or otherwise validated. In some embodiments, check code C includes a checksum, a security code, and/or the like. Additionally or alternatively, data in the data transmission 306 specifies a destination (e.g., ECU110B) for the data transmission 306. In various embodiments, check code C includes a security value such as a symmetric, asymmetric, or other cryptographic value, a hash, a shared secret and/or the like. In some embodiments, check code C may be source and/or destination specific. Electronic control unit 110A uses the protocol code K, the parameter, the write data WD, and a length value L to generate data 130 for data transmission 306. Electronic control unit 110A determines the length value L based on the protocol code K, the parameter, the write data WD, and a reserved data length for the length value L. Electronic control unit 110A transmits data transmission 306 to electronic control unit 110B through the audio network 133. Electronic control unit 110B receives data transmission 306. Electronic control unit 110B validates the length of the data transmission 306 based on the length value L, and validates check code C based on a shared secret, a cryptographic process, and/or the like. If the length of the data transmission 306 and the check code C are validated, electronic control unit 110B uses the data 130 to perform the command based on the protocol code K, the parameter, and/or the write data WD. While communication sequence 302 is a main-to-secondary communication, some embodiments involve a secondary-to-main communication, such that the functions for each device are reversed relative to the description of communication sequence 302.

Communication sequence 304 performs a command that includes validation information, where the command requests a response. Electronic control unit 110A identifies the protocol code K, the parameter and write data WD for data transmission 308. As described for data transmission 306 above, electronic control unit 110A also identifies and includes a check code C and a length value L to generate data 130 for data transmission 308. Electronic control unit 110A transmits data transmission 308 to electronic control unit 110B through the audio network 133. Electronic control unit 110B receives data transmission 308 and validates the length of the data transmission 308 and check code C. If the length of the data transmission 308 and the check code C are validated, electronic control unit 110B uses the data 130 to perform the command based on the protocol code K, the parameter, and/or the write data WD. The command causes electronic control unit 110B to generate data 130 for a response, for example, based on the protocol code K, the parameter, the write data WD, as well as one or more states or processes of electronic control unit 110B. In the example shown, electronic control unit 110B also identifies payload data such as read data RD that is read based on the command. Electronic control unit 110B uses the read data RD as well as the protocol code K and the parameter from data transmission 308 to generate the data 130 for a response such as data transmission 310. Electronic control unit 110B uses the protocol code K, the parameter, the read data RD, and a length value L to generate data 130 for data transmission 308. Electronic control unit 110B determines the length value L based on the protocol code K, the parameter, the read data RD, and a reserved data length for the length value L. Electronic control unit 110B advantageously transmits data transmission 310 to electronic control unit 110A through the audio network 133. In some embodiments, electronic control unit 110A, validates the length of data transmission 310 and check code C, and if validated, performs a command based on the protocol code K, the parameter, and the read data RD of data transmission 310. While communication sequence 304 is initiated using a main-to-secondary communication, some embodiments are initiated using a secondary-to-main communication, such that the functions for each device are reversed relative to the description of communication sequence 304.

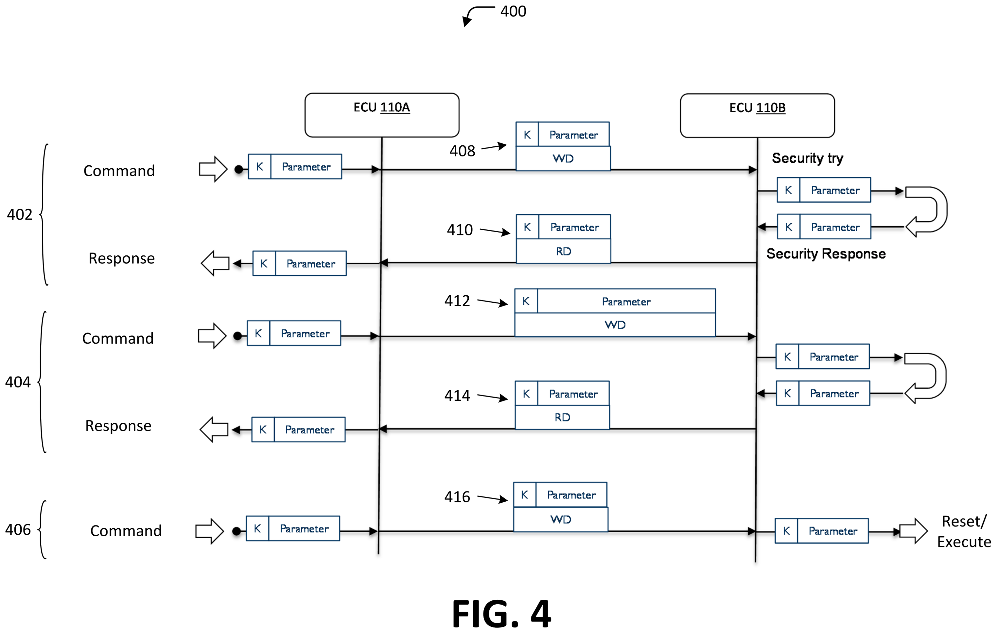

Figure 4 is another sequence diagram 400 illustrating a firmware or software update process of the audio system 100 of Figure 1, according to various embodiments. The sequence diagram 400 includes, without limitation, an electronic control unit 110A, an electronic control unit 110B, a communication sequence 402, and a communication sequence 404. The communication sequence 402 includes, without limitation, data transmission 408 and data transmission 410. The communication sequence 404 includes, without limitation, data transmission 412 and data transmission 414. The communication sequence 406 includes, without limitation, data transmission 416. By way of comparison with sequence diagram 200 of Figure 2 and sequence diagram 300 of Figure 3, the sequence diagram 400 shows an example where data transmissions are secured by performing a security check using communication sequence 402. In some embodiments, a length and/or a check code can additionally be used in each data transmission of sequence diagram 400.

Communication sequence 402 performs a security validation command that requests a security response. In some embodiments, the communication sequence 402 is a mutual authentication sequence between electronic control unit 110A and ECU110B. In some embodiments, electronic control unit 110A determines whether to perform a security validation process, for example, based on a time elapsed relative to a prior security validation, a security timing schedule, a result of a prior security validation process, a command or response from an application layer, and/or the like. If a security validation process is to be performed, electronic control unit 110A identifies a protocol code K for the security validation command, the parameter and write data WD for data transmission 408. In some embodiments, the write data WD (or payload data) includes a security data payload such as a symmetric, asymmetric, or other cryptographic value, a hash, a shared secret and/or the like. In some embodiments, a security payload may be source and/or destination specific. Electronic control unit 110A transmits data transmission 408 to electronic control unit 110B through the audio network 133. While communication sequence 402 is initiated using a main-to-secondary communication, some embodiments are initiated using a secondary-to-main communication, such that the functions for each device are reversed relative to the description of communication sequence 402.

Electronic control unit 110B receives data transmission 408. Electronic control unit 110B validates security data provided in data transmission 408, for example, by performing a command based on the protocol code K, the parameter, and/or the write data WD in the data transmission 408. The command causes electronic control unit 110B to generate data 130 for a security response. For example, electronic control unit 110B identifies payload data such as read data RD that is read based on the command, as well as a protocol code K and a parameter for data transmission 410. The read data RD (or payload data) includes security data that is read from data stored by electronic control unit 110B, whether the read data RD is the same or different from the security data in the data transmission 408. Electronic control unit 110B transmits data transmission 410 to electronic control unit 110A through the audio network 133. Electronic control unit 110A receives data transmission 410.

Electronic control unit 110A determines to perform communication sequence 404 based on a command received from an application or application layer. In some embodiments, electronic control unit 110A receives the command prior to performing communication sequence 402, such that electronic control unit 110A ensures a secure connection using communication sequence 402 and then performs communication sequence 404. For example, electronic control unit 110A determines to perform communication sequence 404 based on the command received from the application and based further on receiving and validating data transmission 410. Electronic control unit 110A validates security data provided in data transmission 410, for example, by performing a command based on the protocol code K, the parameter, and/or the read data RD in the data transmission 410.

Communication sequence 404 includes a software update command that requests a response such as an indication of completion of the software update. Electronic control unit 110A identifies a protocol code K for the software update command, as well as the parameter and write data WD for data transmission 412. In some embodiments, the write data WD (or payload data) includes a software update such as a firmware update or application update for electronic control unit 110B. Electronic control unit 110A transmits data transmission 412 to electronic control unit 110B through the audio network 133. Electronic control unit 110B receives data transmission 412. Electronic control unit 110B flashes or otherwise installs a software update provided in data transmission 412, for example, by performing a command based on the protocol code K, the parameter, and/or the write data WD in the data transmission 412. The command also causes electronic control unit 110B to generate data 130 for a response. Electronic control unit 110B generates and transmits data transmission 414 to electronic control unit 110A through the audio network 133. Electronic control unit 110A receives data transmission 414. While communication sequence 404 is initiated using a main-to-secondary communication, some embodiments are initiated using a secondary-to-main communication, such that the functions for each device are reversed relative to the description of communication sequence 404.

Communication sequence 406 includes a command such as a reset and/or execute command that does not involve a response. In some embodiments, the reset/execute command causes electronic control unit 110B to execute the newly installed software update provided in data transmission 412. To this end, electronic control unit 110A identifies a protocol code K for the reset/execute command, as well as the parameter and write data WD for data transmission 416. Electronic control unit 110A transmits data transmission 416 to electronic control unit 110B through the audio network 133. Electronic control unit 110B receives data transmission 416. Electronic control unit 110B performs the reset/execute command based on the protocol code K, the parameter, and/or the write data WD in the data transmission 416. While communication sequence 406 involves a main-to-secondary communication, some embodiments involve a secondary-to-main communication, such that the functions for each device are reversed relative to the description of communication sequence 406.

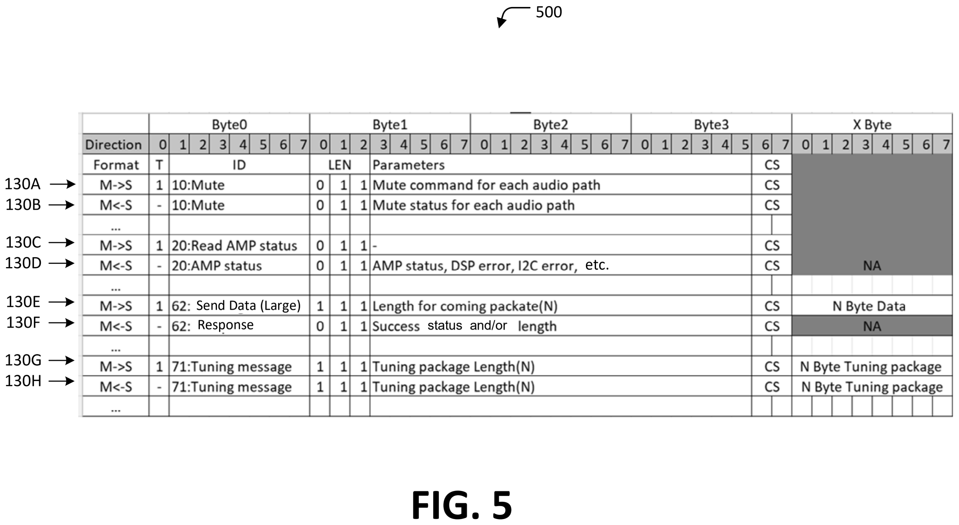

Figure 5 is a data structure diagram 500 for data transmitted by the audio system 100 of Figure 1, according to various embodiments. The data structure diagram 500 includes, without limitation, data 130A, data 130B, data 130C, data 130D, data 130E, data 130F, data 130G, and data 130H.

The data structure diagram 500 shows byte level information for each of the example items of data 130A-130H. In the shown embodiment, each of the examples of data 130A-130H (e.g., data 130) is associated with a format indicating main-to-secondary then secondary-to-main communication sequences. Some embodiments involve data 130 for other communication sequence formats or types. For example, the described protocols support communication sequences including main-to-secondary then secondary-to-main communications, secondary-to-main then main-to-secondary communications, main-to-secondary without a response, secondary-to-main without a response, and/or the like. In the shown embodiment, each example of data 130 includes a function identifier, length data, parameters, a checksum, and one or more (e.g., "X") bytes that provide payload data. In some embodiments, the data 130 includes one or more addresses (and/or unique device identifiers) that target data 130 to target a single electronic control unit 110 or multiple electronic control units 110 when transmitted over a bus. Each electronic control unit 110 reads the addresses or identifiers and accepts (e.g., performs a specified command) or rejects (e.g., declines to perform a specified command) based on whether an address or identifier matches a locally stored address or identifier. In the shown embodiment, each example of data 130 includes a single function identifier for a single topic, function, or command. In some embodiments, a single data 130 communication includes multiple function identifiers for multiple topics, functions, or commands (and/or multiple corresponding parameters for each topic, function, or command). In such an example, one or more electronic control units 110 that receive and consume the data 130 perform multiple commands. In some embodiments, a response from an electronic control unit 110 that receives and consumes data 130 that specifies multiple topics, functions, or commands includes response information for each of the topics, functions, or commands in a single response.

In the example shown, data 130A is transmitted from a main device to a secondary device (e.g., M->S). Byte zero of data 130A specifies a mute topic or command. Byte one of data 130A specifies length information in bits 0-2. A parameter such as mute commands for one or more audio paths is provided using bits 3-7 of byte one, bits 0-7 of byte two, and bits 0-5 of byte 3. A checksum is provided in bits 6-7 of byte 3. Data 130B is transmitted from a secondary device to a main device (e.g., M<-S), for example, in response to performing a command according to data 130A. Byte zero of data 130B specifies a mute topic or command. Byte one of data 130B specifies length information in bits 0-2. A parameter such as a mute status for one or more audio paths is provided using bits 3-7 of byte one, bits 0-7 of byte two, and bits 0-5 of byte 3. A checksum is provided in bits 6-7 of byte 3.

Data 130C is transmitted from a main device to a secondary device (e.g., M->S). Byte zero of data 130C specifies a read amplifier status topic or command. Byte one of data 130C specifies length information in bits 0-2. In this example, bits 3-7 of byte one, bits 0-7 of byte two, and bits 0-5 of byte 3, corresponding to parameter data, is blank. A checksum is provided in bits 6-7 of byte 3. Data 130D is transmitted from a secondary device to a main device (e.g., M<-S), for example, in response to performing a command according to data 130C. Byte zero of data 130D specifies a read amplifier status topic or command. Byte one of data 130D specifies length information in bits 0-2. A parameter such as an amplifier status, and one or more errors is provided using bits 3-7 of byte one, bits 0-7 of byte two, and bits 0-5 of byte 3. A checksum is provided in bits 6-7 of byte 3.

Data 130E is transmitted from a main device to a secondary device (e.g., M->S). Byte zero of data 130E specifies a send data topic or command. Byte one of data 130E specifies length information in bits 0-2. In this example, bits 3-7 of byte one, bits 0-7 of byte two, and bits 0-5 of byte 3, corresponding to parameter data, indicate a length values specifying N additional bytes of data. A checksum is provided in bits 6-7 of byte 3. Data 130E also includes some number N additional bytes of data, such as a software package or other information for transfer. Data 130F is transmitted from a secondary device to a main device (e.g., M<-S), for example, in response to performing a command according to data 130E. Byte zero of data 130F specifies a send data topic or command. Byte one of data 130F specifies length information in bits 0-2. A parameter such as a success status and/or transfer length associated with the data 130E, and one or more errors is provided using bits 3-7 of byte one, bits 0-7 of byte two, and bits 0-5 of byte 3. A checksum is provided in bits 6-7 of byte 3.

Data 130G is transmitted from a main device to a secondary device (e.g., M->S). Byte zero of data 130G specifies a tuning message topic or command. Byte one of data 130G specifies length information in bits 0-2. In this example, bits 3-7 of byte one, bits 0-7 of byte two, and bits 0-5 of byte 3, corresponding to parameter data, indicate a length values specifying N additional bytes of data for a tuning package. A checksum is provided in bits 6-7 of byte 3. Data 130G also includes some number N additional bytes of data, such as a tuning package for an audio ECU. Data 130H is transmitted from a secondary device to a main device (e.g., M<-S), for example, in response to performing a command according to data 130G. Byte zero of data 130H specifies a send data topic or command. Byte one of data 130H specifies length information in bits 0-2. A parameter such as a success status and/or tuning package length (e.g., associated with the data 130G), and one or more errors is provided using bits 3-7 of byte one, bits 0-7 of byte two, and bits 0-5 of byte 3. A checksum is provided in bits 6-7 of byte 3. Data 130H also includes some number N additional bytes of data, such as a tuning package response, a tuning status, or other information.

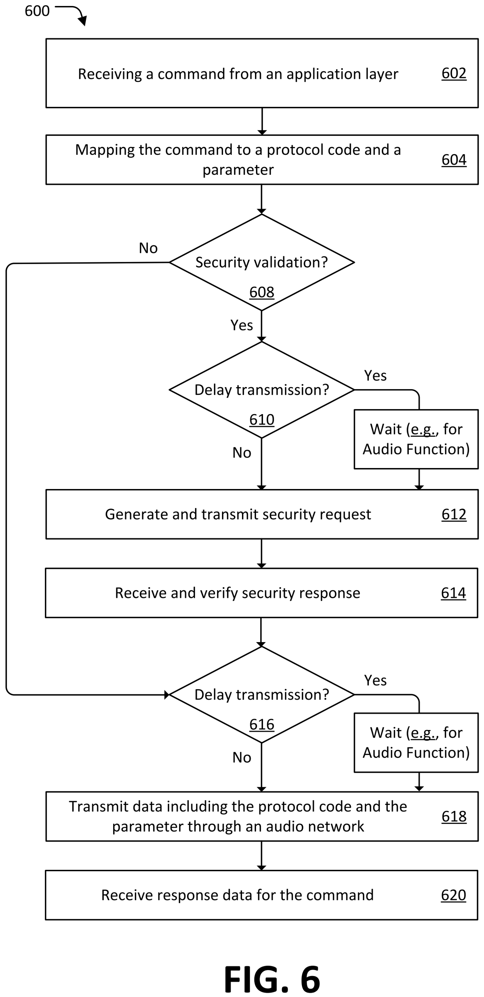

Figure 6 is a flow diagram of method steps for transmitting data using the audio system 100 of Figure 1, according to various embodiments. Although the method steps are shown in an order, persons skilled in the art will understand that some method steps may be performed in a different order, repeated, omitted, and/or performed by components other than those described in Figure 6. Although the method steps are described with respect to the components and systems of Figures 1-5, persons skilled in the art will understand that any system configured to perform the method steps, in any order, falls within the scope of the various embodiments. While the steps are described as being performed by electronic control unit 110A, the steps may also be performed by electronic control unit 110B or another computing device.

As shown, a method 600 begins at step 602, where electronic control unit 110A receives a command from an application or application layer. In some embodiments, a protocol layer of electronic control unit 110A receives a command from an application layer 120A of electronic control unit 110A. The command causes an event such as a read, write, update, reset and/or the like.

At step 604, electronic control unit 110A maps the command to a protocol code and a parameter. For example, electronic control unit 110A includes or stores a data structure that includes a mapping of commands to protocol codes and/or parameters. Electronic control unit 110A translates or maps the command received from the application to the protocol code and the parameter to perform the command. In some embodiments, electronic control unit 110B identifies additional payload data for performing the command. Electronic control unit 110B uses the protocol code, the parameter, and/or the payload data to generate data 130 to perform the command.

At step 608, electronic control unit 110A determines whether to perform a security validation process, for example, prior to sending a data transmission to perform the command received in step 602. In some embodiments, electronic control unit 110A determines whether to perform a security validation process, for example, based on a time elapsed relative to a prior security validation, a security timing schedule, a result of a prior security validation process, a command or response from an application layer, and/or the like. If a security validation is to be performed, electronic control unit 110A proceeds to step 610. Otherwise, electronic control unit 110A proceeds to step 616.

At step 610, electronic control unit 110A determines whether to delay transmission. For example, electronic control unit 110A determines whether to delay transmission based on whether any audio functions are to be transmitted using audio network 133 and/or whether the audio functions are higher priority than the command. In some embodiments, electronic control unit 110A compares a priority ranking of the audio functions to a priority ranking for a security validation command. Electronic control unit 110A stores a ranked list or other data structure that specifies priorities for various commands as well as audio control functions. Audio control functions include mute, volume changes, and the like. In some examples, muting or otherwise reducing audio levels has a higher priority than software updates, security checks, status checks, tuning functions, and/or the like. If transmission is to be delayed, electronic control unit 110A waits for a predetermined time and/or until the audio control function is completed, and proceeds to step 612. Otherwise, electronic control unit 110A moves to step 612 without delay.

At step 612, electronic control unit 110A generates and transmits a security request. For example, electronic control unit 110A identifies a protocol code, a parameter, and payload data. Electronic control unit 110A uses he protocol code, parameter, and payload data to generate data 130 for the security request. Electronic control unit 110A transmits the data 130 through the audio network 133, for example, to electronic control unit 110B.

At step 614, electronic control unit 110A receives and verifies a security response from electronic control unit 110B. For example, electronic control unit 110B receives the security request and validates security data provided in data 130. Electronic control unit 110B generates and transmits data 130 for a security response. Electronic control unit 110A receives the security response. Electronic control unit 110A verifies or validates the security response based on data 130 in the security response. If the security response is validated, electronic control unit 110A proceeds to step 616.

At step 616, electronic control unit 110A determines whether to delay transmission for the command received in step 602. Electronic control unit 110A determines whether to delay transmission in a manner similar to that described in step 610. Electronic control unit 110A determines whether any audio functions are to be transmitted using audio network 122 and/or whether the audio functions are higher priority than the command received in step 602. If transmission is to be delayed, electronic control unit 110A waits for a predetermined time and/or until the audio control function is completed, and proceeds to step 618. Otherwise, electronic control unit 110A moves to step 618 without delay.

At step 618, electronic control unit 110A transmits data 130 to perform the command. For example, electronic control unit 110A generates data 130 that includes a protocol code, a parameter, and/or payload data to perform the command. Electronic control unit 110A transmits the data 130 to electronic control unit 110B over the audio network 133.

At step 620, electronic control unit 110A receives response data for the command. Electronic control unit 110A receives response data from electronic control unit 110B over the audio network 133. In some embodiments, the response data for the command includes one or more of a protocol code, a parameter, and/or payload data.

In sum, techniques are disclosed involve receiving, by a protocol layer of a first computing device, a command from a first application layer of the first computing device; mapping the command to a protocol code and a parameter; and transmitting, to a second computing device, data that includes the protocol code and the parameter, where the data is transmitted through an audio network, for example, for a vehicle.

At least one technical advantage of the disclosed techniques relative to the prior art is that the disclosed techniques increase the actual data transfer speed of tuning operations, system diagnostics, and firmware updates for the vehicle audio system. The disclosed techniques also reduce overhead on a vehicle CAN bus. The disclosed techniques also reduce communications failures and network resource competition. The reduction of failed communications reduces the total number of communications generated in the overall system. As a result, the disclosed techniques provide improved communications reliability for the audio system as well as other vehicle systems.
1. In some embodiments, a computer-implemented method comprises receiving, by a protocol layer of a first computing device, a command from a first application layer of the first computing device, mapping, by the protocol layer, the command to a protocol code and a parameter, and transmitting, by the first computing device to a second computing device, data comprising the protocol code and the parameter, wherein the data is transmitted through an audio network.
2. The computer-implemented method of clause 1, wherein the command is a command to update a second application layer of the second computing device.
3. The computer-implemented method of clauses 1 or 2, wherein the command is a command to perform a security operation.
4. The computer-implemented method of any of clauses 1-3, further comprising providing the protocol code and the parameter to a serial peripheral interface link layer of the first computing device, wherein the serial peripheral interface link layer adds node information corresponding to the second computing device.
5. The computer-implemented method of any of clauses 1-4, wherein the audio network comprises a serial peripheral interface bus.
6. The computer-implemented method of any of clauses 1-5, further comprising determining whether to delay transmitting the data based on an audio control function that utilizes the audio network.
7. The computer-implemented method of any of clauses 1-6, wherein the determining whether to delay transmitting the data is further based on priorities for one or more of the command or the audio control function.
8. In some embodiments, one or more non-transitory computer-readable media store instructions that, when executed by one or more processors, cause the one or more processors to perform a method comprising receiving, by a protocol layer of a first computing device, a command from a first application layer of the first computing device, mapping, by the protocol layer, the command to a protocol code and a parameter, and transmitting, by the first computing device to a second computing device, data comprising the protocol code and the parameter, wherein the data is transmitted through an audio network.
9. The one or more non-transitory computer-readable media of clause 8, wherein the command is a command to update a second application layer of the second computing device.
10. The one or more non-transitory computer-readable media of clauses 8 or 9, wherein the command is a command to perform a security operation.
11. The one or more non-transitory computer-readable media of any of clauses 8-10, wherein the method further comprises providing the protocol code and the parameter to a serial peripheral interface link layer of the first computing device, wherein the serial peripheral interface link layer adds node information corresponding to the second computing device.
12. The one or more non-transitory computer-readable media of any of clauses 8-11, wherein the audio network comprises a serial peripheral interface bus.
13. The one or more non-transitory computer-readable media of any of clauses 8-12, wherein the method further comprises determining whether to delay transmitting the data based on an audio control function that utilizes the audio network.
14. The one or more non-transitory computer-readable media of any of clauses 8-13, wherein the determining whether to delay transmitting the data is further based on priorities for one or more of the command or the audio control function.
15. In some embodiments, a system comprises a memory storing instructions, and one or more processors, that when executing the instructions, are configured to perform a method comprising receiving, by a protocol layer of a first computing device, a command from a first application layer of the first computing device, mapping, by the protocol layer, the command to a protocol code and a parameter, and transmitting, by the first computing device to a second computing device, data comprising the protocol code and the parameter, wherein the data is transmitted through an audio network.
16. The system of clause 15, wherein the command is a command to update a second application layer of the second computing device.
17. The system of clauses 15 or 16, wherein the command is a command to perform a security operation.
18. The system of any of clauses 15-17, wherein the method further comprises providing the protocol code and the parameter to a serial peripheral interface link layer of the first computing device, wherein the serial peripheral interface link layer adds node information corresponding to the second computing device.
19. The system of any of clauses 15-18, wherein the audio network comprises a serial peripheral interface bus.
20. The system of any of clauses 15-19, wherein the method further comprises determining whether to delay transmitting the data based on an audio control function that utilizes the audio network.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable processors or gate arrays.

Flowcharts and block diagrams in the figures illustrate the architecture, functionality, and operation of possible implementations of systems, methods, and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method, comprising:
receiving, by a protocol layer of a first computing device, a command from a first application layer of the first computing device;
mapping, by the protocol layer, the command to a protocol code and a parameter; and
transmitting, by the first computing device to a second computing device, data comprising the protocol code and the parameter, wherein the data is transmitted through an audio network.

2. The computer-implemented method of claim 1, wherein the command is a command to update a second application layer of the second computing device.

3. The computer-implemented method of claim 1 or 2, wherein the command is a command to perform a security operation.

4. The computer-implemented method of any preceding claim, further comprising:
providing the protocol code and the parameter to a serial peripheral interface link layer of the first computing device, wherein the serial peripheral interface link layer adds node information corresponding to the second computing device.

5. The computer-implemented method of any preceding claim, wherein the audio network comprises a serial peripheral interface bus.

6. The computer-implemented method of any preceding claim, further comprising:
determining whether to delay transmitting the data based on an audio control function that utilizes the audio network.

7. The computer-implemented method of claim 6, wherein the determining whether to delay transmitting the data is further based on priorities for one or more of the command or the audio control function.

8. One or more non-transitory computer-readable media storing instructions that, when executed by one or more processors, cause the one or more processors to perform a method comprising:
receiving, by a protocol layer of a first computing device, a command from a first application layer of the first computing device;
mapping, by the protocol layer, the command to a protocol code and a parameter; and
transmitting, by the first computing device to a second computing device, data comprising the protocol code and the parameter, wherein the data is transmitted through an audio network.

9. The one or more non-transitory computer-readable media of claim 8, wherein the instructions, when executed by the one or more processors, cause the one or more processors to perform a method as mentioned in any of claims 1 to 7.

10. A system comprising:
a memory storing instructions; and
one or more processors, that when executing the instructions, are configured to perform a method comprising:
receiving, by a protocol layer of a first computing device, a command from a first application layer of the first computing device;
mapping, by the protocol layer, the command to a protocol code and a parameter; and
transmitting, by the first computing device to a second computing device, data comprising the protocol code and the parameter, wherein the data is transmitted through an audio network.

11. The system of claim 10, wherein the command is a command to update a second application layer of the second computing device.

12. The system of claim 10 or 11, wherein the command is a command to perform a security operation.

13. The system of any of claims 10 to 12, wherein the method further comprises:
providing the protocol code and the parameter to a serial peripheral interface link layer of the first computing device, wherein the serial peripheral interface link layer adds node information corresponding to the second computing device.

14. The system of any of claims 10 to 13, wherein the audio network comprises a serial peripheral interface bus.

15. The system of any of claims 10 to 14, wherein the method further comprises:
determining whether to delay transmitting the data based on an audio control function that utilizes the audio network.
